# EUROPÄISCHE PATENTANMELDUNG

(11) **EP 1 531 537 A1**
(43) Veröffentlichungstag der Anmeldung: **18.05.2005**
(21) Anmeldenummer: 03025994.9
(22) Anmeldetag: 14.11.2003
(51) Int. Cl.: H02J 13/00

(54) **Funkrundsteuerempfänger**

(71) Anmelder: LIC Langmatz GmbH, 82467 Garmisch-Partenkirchen (DE)
(72) Erfinder:
(74) Vertreter: Flosdorff, Jürgen, Dr.

(57) **Zusammenfassung**

Der Funkrundsteuerempfänger ist dadurch gekennzeichnet, daß er einen Steckplatz aufweist, auf den wahlweise ein Langwellenempfänger oder ein Uhrenmodul aufsteckbar ist. Wenn der Langwellenempfang am Einbauort des Funkrundsteuerempfängers unzureichend ist, kann der Langwellenempfänger schnell und einfach gegen ein Uhrenmodul ausgetauscht werden, so daß der Funkrundsteuerempfänger als Schaltuhr betrieben werden kann. Wenn der Langwellenempfang verbessert ist, kann das Uhrenmodul ebenso schnell und einfach gegen einen Langwellenempfänger ausgetauscht werden. Hierdurch ist es möglich, beispielsweise in einem großen Versorgungsbereich eines Energieversorgungsunternehmens alle Empfänger mit demselben Funkrundsteuerempfänger auszurüsten, der wahlweise mit einem Langwellenempfänger oder mit einem Uhrenmodell versehen wird. Durch diese flexible Einsatzmöglichkeit ist der Funkrundsteuerempfänger für eine Massenproduktion zu verhältnismäßig geringen Kosten bestens geeignet.

## Beschreibung

Die Erfindung betrifft einen Funkrundsteuerempfänger, der für viele verschiedene Steuerungs-, Schalt- und Lastführungsaufgaben einsetzbar ist. Als Beispiele für das Einsatzgebiet des Funkrundsteuerempfängers seien beispielsweise genannten: Umschalten von Mehrtarif- und Maximumstromzählern, Schalten einer Straßenbeleuchtung, Heizgruppensteuerung, Lastbeeinflussung in Industrieunternehmen, Steuerung von Speicherheizungen, Warmwasserbereitern, Klimageräten, Industrieöfen und Kühlanlagen und dergleichen mehr.

Ein derartiger Funkrundsteuerempfänger enthält ein Gehäuse, in dem unter anderem eine Rechnereinheit mit einer Dekodereinheit, wenigstens ein Steuerrelais und eine Ferrit-Antenne zum Empfang von Langwellensignalen angeordnet sind.

Gegenwärtig betreiben viele Energieversorgungsunternehmen eine drahtgebundene Rundsteuerung, um Steuerbefehle an eine große Anzahl von Empfängern in ihrem Versorgungsbereich zu übertragen. Mit diesen Signalen werden Tarifzähler, Straßenbeleuchungen und Lastführungsaufgaben geschaltet. Mit der Rundsteuerung läßt sich z.B. die Einspeisung von Spitzenlasten minimieren, wodurch die Energieerzeugungskosten gesenkt werden können und sich der Bau zusätzlicher Kraftwerke einsparen läßt. Diese drahtgebundene Rundsteuerung hat den Nachteil, daß sie mit beträchtlichen Kosten verbunden ist, und daß vielfältige Probleme in der Informationsübermittlung auftreten können.

Diese Nachteile lassen sich durch ein Funkrundsteuersystem vermeiden, das aus einem Zentralrechner, einem Langwellensender und den Funkrundsteuerempfängern besteht, die Gegenstand der vorliegenden Patentanmeldung sind. Der Zentralrechner hat u.a. die Aufgabe, Telegramme der Teilnehmer des Funkrundsteuersystems an einen Langwellensender weiterzugeben, der bevorzugt mit einer Trägerfrequenz von 129,1 Kiloherz arbeitet, wobei die Modulation nach dem FSK-Verfahren (Frequency-Shift-Keying) erfolgt. Die Funktelegramme werden von einem Funkrundsteuerempfänger empfangen, der die Signale des Senders umsetzt und beispielsweise mittels eines Relais einen Tarifzähler von Hoch- auf Niedrigtarif umschaltet.

Beim Einsatz eines Funkrundsteuerempfängers kann es sich herausstellen, daß der Empfang von Funksignalen so schlecht ist, daß der Funkrundsteuerempfänger seine Funktion nicht erfüllen kann. Um trotzdem am Einsatzort Schaltvorgänge ausführen zu können, die zu bestimmten Zeiten erfolgen sollen, bleibt bisher nichts anderes übrig, als den Funkrundsteuerempfänger durch eine Schaltuhr zu ersetzen, was mit beträchtlichen Kosten verbunden ist. In manchen Gebieten, in denen ein Langwellenempfang nicht erfolgen kann, werden von vornherein Schaltuhren angeordnet, um Schaltvorgänge der betrachteten Art ausführen zu können. Wenn später durch Inbetriebnahme eines neuen oder eines leistungsstärkeren Langwellensenders in diesem Gebiet der Empfang von Langwellen möglich ist, können die Schaltuhren durch Funkrundsteuerempfänger ersetzt werden, was ebenfalls mit erheblichen Kosten verbunden ist.

Aufgabe der vorliegenden Erfindung ist es, eine kostengünstigere Lösung für die obigen Probleme anzugeben.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Der erfindungsgemäße Funkrundsteuerempfänger enthält einen Steckplatz, auf den wahlweise ein Langwellenempfänger oder ein Uhrenmodul lösbar aufsteckbar ist. Dies bedeutet, daß die Stecker des Langwellenempfängers und des Uhrenmoduls exakt identisch sind, so daß bei dem Funkrundsteuerempfänger ein auf den Steckplatz aufgesteckter Langwellenempfänger praktisch ohne Arbeitsaufwand und mit geringen Kosten gegen ein Uhrenmodul austauschbar ist, wenn sich herausstellt, daß der Langwellenempfang unzureichend ist, so daß der Funkrundsteuerempfänger als eine moderne Schaltuhr betrieben werden kann. Wenn der Langwellenempfang verbessert ist, kann das Uhrenmodul ebenso schnell und einfach gegen einen Langwellenempfänger ausgetauscht werden.

Dabei ist mit Vorteil vorgesehen, daß das Gehäuse des Uhrenmoduls in seinen Abmessungen mit denjenigen des Langwellenempfängers übereinstimmt.

Mit aufgestecktem Uhrenmodul wird der erfindungsgemäße Funkrundsteuerempfänger somit als bevorzugt synchronisierte Schaltuhr betrieben. Dabei kann die interne Uhr des Uhrenmoduls wahlweise durch einen Quartz stabilisiert werden, wobei sowohl ein Normalquartz als auch ein hochgenauer temperaturstabilisierter Quartz verwendet werden kann.

Die interne Uhr des Uhrenmoduls kann aber auch durch einen DCF77 Empfänger synchronisiert werden, mit dem kostenlos Zeitsignale empfangen werden können, während für die Nutzung des oben erwähnten Langwellensenders Gebühren erhoben werden. Der DCF77-Empfänger wirkt mit einer Antenne zusammen, die die für den Langwellenempfänger vorgesehene Ferrit-Antenne ersetzt, die ebenfalls bevorzugt in eine Antennentrommel drehbar eingebaut ist.

Wenn der Funkrundsteuerempfänger mit dem Uhrenmodul versehen ist, kann die Uhrzeit und das Datum per PC-Software mittels einer seriellen Schnittstelle eingestellt werden. Dieser Einstellvorgang kann alternativ hierzu auch durch ein Synchronmodul erfolgen, wobei es sich um ein batteriebetriebenes Gerät handelt, in dem eine batteriegepufferte Echtzeituhr enthalten ist. Das Synchronmodul kann über eine einfache Kabelverbindung die interne Uhr des Uhrenmoduls synchronisieren. Dank einer integrierten Goldcap oder eines Akkumulators bleibt danach die eingespeicherte Uhrzeit erhalten.

Es ist auch möglich, mit der PC-Software eine automatische Winter- und Sommerzeitumstellung zu aktivieren, wobei die Umschaltzeitpunkte für die nächsten 100 Jahre einstellbar sind.

Wenn das in dem Funkrundsteuerempfänger angeordnete Uhrenmodul an Spannung angelegt wird, sendet es unmittelbar ein Zeitsignal, bevorzugt ein kodiertes EFR-Zeitsignal, an die Dekodereinheit des Funkrundsteuerempfängers. Zudem kann die Aussendung dieses Signals in Zeitabständen erfolgen, die durch die PC-Software einstellbar sind, wodurch der Funkrundsteuerempfänger bei Verwendung eines DCF77-Empfängers ständig nachsynchronisiert wird.

Die Erfindung ermöglicht es, beispielsweise in einem großen Versorgungsbereich eines Energieversorgungsunternehmens alle Empfänger mit demselben Funkrundsteuerempfängergerät auszurüsten, das wahlweise mit einem Langwellenempfänger oder mit einem Uhrenmodell versehen wird, wobei im letzteren Falle das Gerät als Schaltuhr arbeitet. Abgesehen von der Austauschbarkeit eines Langwellenempfängers gegen ein Uhrenmodul (und umgekehrt) enthält der Funkrundsteuerempfänger in beiden Betriebsarten dieselben Bauteile bzw. Werkzeuge, u.a. dieselbe Software, mit der u.a. Schaltzeiten einstellbar sind. Durch diese flexible Einsatzmöglichkeit des erfindungsgemäßen Funkrundsteuerempfängers ist dieser für eine Massenproduktion bestens geeignet, wobei erhebliche Kosteneinsparungen erzielt werden.

Weitere Einzelheiten der Erfindung ergeben sich aus der nachfolgenden Beschreibung einer bevorzugten Ausführungsform des Funkrundsteuerempfängers sowie anhand der Zeichnungen. Dabei zeigen:
- Figur 1: eine Aufsicht auf ein Uhrenmodul;
- Figur 2: das Uhrenmodul gemäß Figur 1 in einer Seitenansicht
- Figur 3: eine Ansicht des Uhrenmoduls mit der Pinbelegung und
- Figur 4: eine Aufsicht auf einen Funkrundsteuerempfänger mit eingebautem Uhrenmodul.

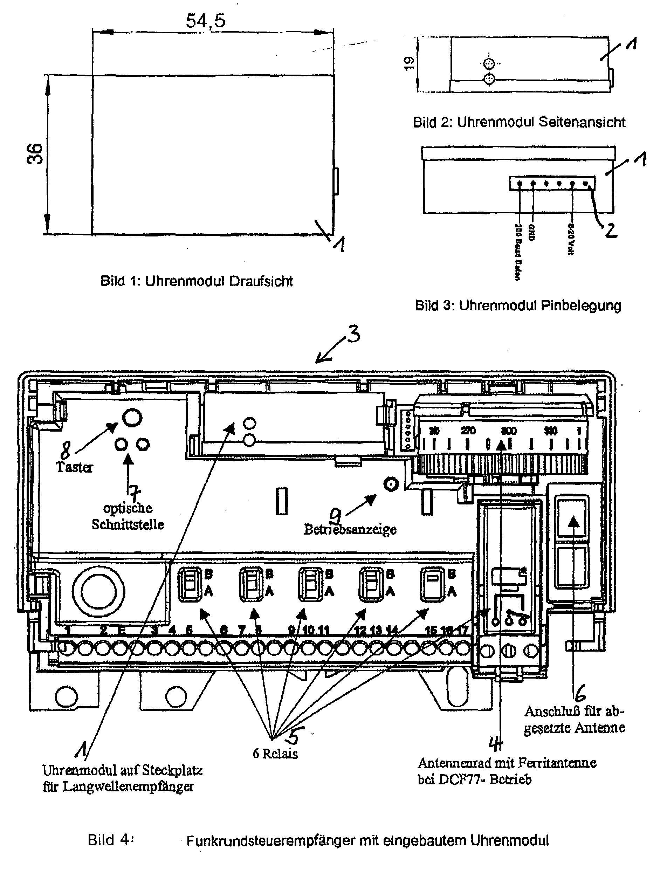

Die Figuren 1 bis 3 zeigen das Gehäuse 1 eines Uhrenmoduls, dessen Abmessungen mit denjenigen des Gehäuses eines nicht dargestellten Langwellensenders übereinstimmen, der alternativ zu dem Uhrenmodul auf den aus Figur 4 ersichtlichen Steckplatz des Funkrundsteuerempfängers aufsteckbar ist. Figur 3 zeigt dabei die Pinbelegung der Stecker 2 des Uhrenmoduls 1.

Figur 4 zeigt in einer Aufsicht wesentliche Bestandteile eines Funkrundsteuerempfängers 3. Der Funkrundsteuerempfänger 3 ist bei dieser Ausführungsform mit dem Uhrenmodul 1 versehen, der auf den Steckplatz eines normalerweise angeordneten Langwellenempfängers aufgesteckt ist. Neben dem Uhrenmodul 1 befindet sich ein Antennenrad 4 mit einer Ferrit-Antenne bei einem DCF 77-Betrieb des Uhrenmoduls 1.

Der Funkrundsteuerempfänger 3 enthält ferner sechs Relais 5, einen Anschluß 6 für eine abgesetzte Antenne, eine optische Schnittstelle 7, einen Taster 8 und eine Betriebsanzeige 9.

## Patentansprüche

1. Funkrundsteuerempfänger mit einem Gehäuse, in dem eine Rechnereinheit mit einer Dekodereinheit, wenigstens ein Steuerrelais (5), ein Steckplatz für einen Langwellenempfänger und eine Ferrit-Antenne angeordnet sind,
**dadurch gekennzeichnet,**
**daß** auf den Steckplatz wahlweise ein Langwellenempfänger oder ein Uhrenmodul (1) aufsteckbar ist.

2. Funkrundsteuerempfänger nach Anspruch 1,
**dadurch gekennzeichnet,**
**daß** die Stecker (2) des Uhrenmoduls (1) mit denjenigen des Langwellensenders übereinstimmen.

3. Funkrundsteuerempfänger nach Anspruch 1 oder 2,
**dadurch gekennzeichnet,**
**daß** die Abmessungen des Gehäuses des Uhrenmoduls mit denjenigen des Gehäuses des Langwellenempfängers übereinstimmen.

4. Funkrundsteuerempfänger nach einem der Ansprüche 1 bis 3,
**dadurch gekennzeichnet,**
**daß** die interne Uhr des Uhrenmoduls (1) durch einen Quartz stabilisiert ist.

5. Funkrundsteuerempfänger nach einem der Ansprüche 1 bis 4,
**dadurch gekennzeichnet,**
**daß** die interne Uhr des Uhrenmoduls (1) durch einen DCF77-Empfänger synchronisierbar ist.

6. Funkrundsteuerempfänger nach einem der Ansprüche 1 bis 5,
**dadurch gekennzeichnet,**
**daß** die Uhrzeit und das Datum des Uhrenmoduls (1) durch eine PC-Software mittels einer seriellen Schnittstelle einstellbar sind.

7. Funkrundsteuerempfänger nach einem der Ansprüche 1 bis 5,
**dadurch gekennzeichnet,**
**daß** die Uhrzeit und das Datum des Uhrenmoduls (1) durch ein Synchronmodul einstellbar sind.
